# EUROPÄISCHE PATENTSCHRIFT

(11) **EP 0 844 142 B1**
(45) Veröffentlichungstag und Bekanntmachung des Hinweises auf die Patenterteilung: **28.08.2002**
(21) Anmeldenummer: 97119958.3
(22) Anmeldetag: 14.11.1997
(51) Int. Cl.: B60R 21/20

(54) **Luftsackabdeckung**
Air bag cover
Couvercle pour sac gonflable

(30) Priorität: 21.11.1996 DE 19648138
(43) Veröffentlichungstag der Anmeldung: 27.05.1998
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- DE-A- 4 306 149
- FR-A- 2 703 012
- GB-A- 2 239 434
- US-A- 5 429 784

## Beschreibung

Die Erfindung bezieht sich auf eine Luftsackabdeckung eines Airbagsystems mit einem Rahmen und einer in eine Austrittsöffnung des Rahmens eingesetzten Klappe. Der Rahmen und die Klappe sind jeweils aus einem schaumstoffbeschichteten folienkaschierten Träger hergestellt, wobei die Folie den Spalt zwischen Klappe und Rahmen überspannt und dabei entlang des Spalts eine Aufreißlinie bildet. Entlang dieser Aufreißlinie ist die Folie verstärkt ausgebildet. Die Klappe ist mit ihrer oberen Seite scharnierartig an den Rahmen angelenkt, so daß sie beim Auslösen des Airbagsystems nach oben wegklappt, wobei die Folie entlang der Aufreißlinie getrennt wird.

Damit dies in vordefinierter Weise erfolgt, wird die Folie entlang der Aufreißlinie z. B. durch eine Reduzierung ihrer Dicke geschwächt. Dabei ist folgendes zu beachten: Die Schwächung soll nicht zu stark ausgeprägt sein, weil dann die Aufreißlinie von außen zu erkennen ist. Dies soll aus ästhetischen Gründen vermieden werden. Außerdem besteht die Gefahr, daß die Folie aufgrund von Umwelteinflüssen oder von außen angreifenden Kräften einreißt und damit der optische Eindruck der Abdeckung weiter verschlechtert wird. Auf der anderen Seite darf die Schwächung aber nicht zu gering ausfallen, da im Luftsack sonst zunächst sehr hohe Drücke aufgebaut werden müssen, damit die Folie reißt und die Klappe die Öffnung frei geben kann. Dies beeinflußt die Entfaltungscharakteristik des Luftsacks möglicherweise negativ. Außerdem besteht die Gefahr, daß beim Aufreißen der Folie Partikel oder kleine Folienfetzen aus dem aufgetrennten Rand herausgerissen werden, da in der Folie vor dem Aufreißen sehr hohe Spannungen aufgebaut worden sind. Diese Teile können, obwohl sie sehr leicht sind, wegen ihrer hohen Geschwindigkeit Verletzungen bei den Fahrzeuginsassen hervorrufen.

Aus der DE 33 15 535 A1 ist eine Luftsackabdeckung bekannt, bei der die Folie aus mindestens zwei Teilen besteht, die über dem Spalt miteinander verschweißt sind. Die Schweißnaht ist schwächer als die Folie selbst, so daß sie eine Aufreißlinie bildet. Nachteilig hierbei ist, daß die Schweißnaht nicht mit gleichbleibender Festigkeit ausgeführt werden kann, so daß in der Reißnaht beim Aufblasen des Luftsacks zumindest abschnittsweise erheblichen Spannungen auftreten können, die das Auslösen von Folienpartikeln fördern.

In der DE 39 04 977 C1 ist die Aufreiß- bzw. Schwächungslinie der Folie in einen außen liegenden Kanal des Schaumstoffs der Abdeckung verlegt. Damit ist sie dem unmittelbaren Blick der Insassen entzogen, so daß die Folie in der Aufreißlinie sehr stark verdünnt werden kann. Allerdings ist die Ausbildung eines derartigen Kanals aus vielerlei Gründen nicht immer angebracht.

Aus der US-A-5 429 784 ist eine weitere Luftsackabdeckung der genannten Art bekannt, bei der die obere Schicht (Folie) der Luftsackabdeckung zu beiden Seiten der Aufreißlinie durch jeweils einen Gewebestreifen verstärkt ist. Die Gewebestreifen sind dabei in diese Schicht oder in die darunter liegende Schaumstoffschicht eingebettet. Bei dieser Ausbildung werden zusätzliche Teile (Gewebestreifen) zur Verstärkung der Folie benötigt, die zur Erhöhung des Gewichtes und des Herstellungsaufwandes der Luftsackäbdeckung beitragen.

Die Erfindung beruht somit auf dem Problem, eine Abdeckung zu schaffen, deren Aufreißlinie nicht zu erkennen ist bzw. nicht erkennbar wird, und bei der andererseits die Gefahr, daß sich beim Aufreißen Folienpartikel lösen, verringert ist.

Dazu wird vorgeschlagen, die Folie einer Luftsackabdeckung gemäß dem Oberbegriff des Anspruchs 1 entlang des Spalts unmittelbar auf den Träger aufzukleben. In der Aufreißlinie wird die Folie geschwächt: Die verbleibende Dicke wird dabei so gewählt, daß die Aufreißlinie von außen nicht zu erkennen ist. Durch die Verstärkung wird verhindert, daß beim Aufreißen Partikel aus dem Rand der Folie herausgerissen werden.

Die an die Aufreißlinie anstoßenden Randbereiche der Folie können mit Gießharz verfestigt werden.

Die Verstärkung wird dadurch bewirkt, daß die Folie entlang des Spalts unmittelbar auf den Träger aufgeklebt wird, d. h., daß im Bereich des Spalts die Folie nicht mit Schaumstoff unterfüttert ist. Träger und Verklebung bilden dabei die Folienverstärkung. Bei dieser Ausführung wird es möglicherweise notwendig sein, den Träger selbst zu verstärken, also ihn z. B. an seiner Unterseite mit Armierungen zu versehen.

Im folgenden soll die Erfindung anhand von drei Zeichnungen näher erläutert werden. Dabei zeigen
- Fig. 1:: einen Querschnitt durch eine Ausführungsform einer Luftsackabdeckung gemäß dem Stand der Technik;
- Fig. 2:: einen Querschnitt durch eine erfindungsgemäße Ausführungsform einer Luftsackabdeckung;
- Fig. 3:: einen weiteren Querschnitt durch eine Luftsackabdeckung gemäß dem Stand der Technik.

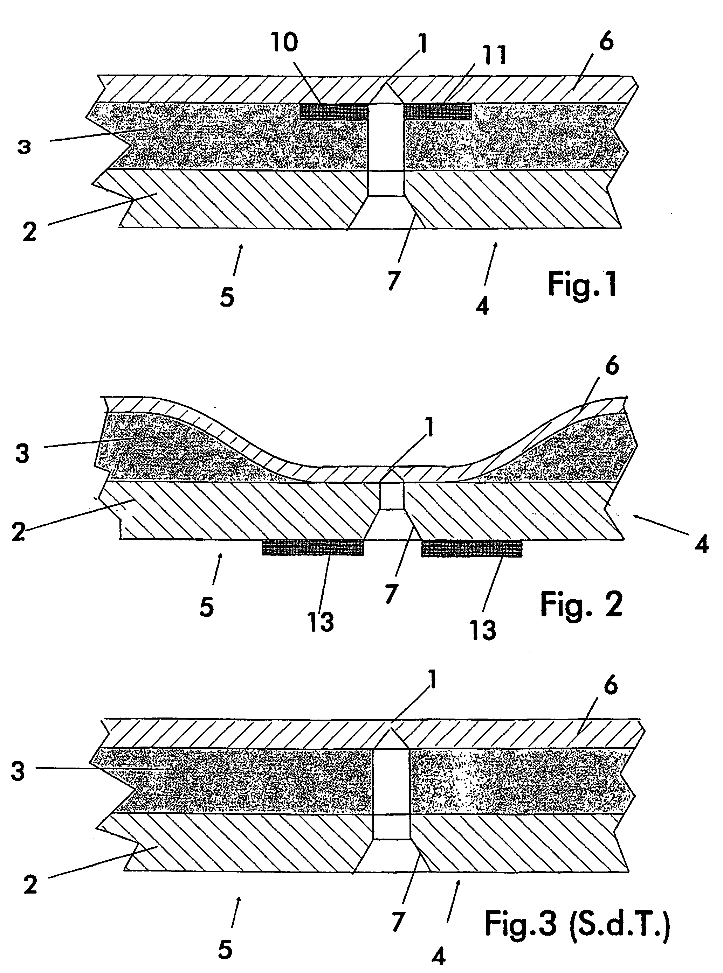

Zunächst wird auf Fig. 3 Bezug genommen. Diese zeigt einen Querschnitt durch eine Luftsackabdeckung senkrecht zu einer Aufreißlinie 1. Die Abdeckung besteht aus einem Rahmen 4, der häufig Teil einer Armaturentafel ist, und einer Klappe 5. Beide Teile weisen jeweils einen z. B. aus defibrierten Holzfasern bestehenden Träger 2 auf, über dem sich eine Schicht 3 aus grobporigem PolyurethanSchaum zur Erzeugung eines sogenannten Soft-Touch-Effekts befindet. Träger 1 und Schaumstoffschicht 3 der Klappe 5 und des Rahmens 4 sind durch einen Spalt 7 voneinander getrennt. Unter dem Träger 2 der Klappe 5 befindet sich der zusammengefaltete Luftsack eines Airbagsystems, der beim Auslösen des Systems entfaltet wird und dabei durch eine von der Klappe 5 abgedeckten Öffnung im Rahmen 4 nach außen drängt. Die Abdeckung ist als Ganzes von einer Folie 6 über der Schaumstoffschicht 3 überspannt. Sie überbrückt den Spalt 7 zwischen dem Rahmen 4 und der Klappe 5. Die Folie 6 kann z. B. aus einem Acrylat, einem Polyvinylchlorid oder einem thermoplastischem Olefin hergestellt sein. Oberhalb des Spaltes 7 ist die Folie 6 allerdings verdünnt, wodurch eine Aufreißlinie 1 ausgebildet ist.

Bei dieser Ausführung nach dem Stand der Technik treten die oben beschriebenen Probleme auf. Mit der Ausführung nach Fig. 1 wird eine weitere Lösung nach dem Stand der Technik gegeben. Dazu wird links und rechts in unmittelbarer Angrenzung an die Aufreißlinie 1 an der Folie 6 jeweils ein Streifen 10, 11 aus technischem Gewebe zur Verstärkung befestigt, d. h. angeklebt oder vernäht. Diese Verstärkung der Folie 6 bewirkt, daß beim Trennen der Folie 6 entlang der Aufreißlinie 1 aus dem Rand der Folie 6 keine Partikel oder kleine Fetzen herausgelöst werden können.

Die Fig. 2 zeigt die erfindungsgemäße Lösung. Bei ihr ist entlang des Spalts 7 zwischen Rahmen 4 und Träger 1 keine Schaumstoffschicht 3 vorgesehen, so daß die Folie 6 unmittelbar auf den Träger 2 aufgeklebt werden kann. Die Verklebung bzw. der Träger 2 selbst bewirkt die Verstärkung der Folie 6. Damit in diesem Fall aus dem Träger 2 keine Partikel herausgerissen werden, kann an der Unterseite eine Armierung 13 vorgesehen werden.

Für die Ausführungen nach Fig. 2 gilt folgendes: Aus Herstellungsgründen kann es vorteilhaft sein, den kompletten Abdeckungsbereich zu armieren. Dies würde bedeuten, daß die Armierung 13 sich ein- oder mehrlagig vollständig über Klappe (zentrale Bereiche vielleicht ausgenommen) und Rahmen erstreckt und lediglich entlang der Aufreißlinie unterbrochen ist.

Dies hätte den Vorteil, daß die Armierung Klappe und Rahmen entlang der Aufklappkante zusätzlich zum Scharnier gelenkig miteinander verbindet, so daß die im Anlenkbereich auftretenden Kräfte beim Aufklappen sicher kompensiert werden können.

### Bezugszeichenliste

- 1: Aufreißlinie
- 2: Träger
- 3: Schaumstoffschicht
- 4: Rahmen
- 5: Klappe
- 6: Folie
- 7: Spalt
- 10: Streifen
- 11: Streifen
- 13: Armierung

## Patentansprüche

1. Luftsackabdeckung mit einem Rahmen (4) und einer in eine Austrittsöffnung des Rahmens (4) eingesetzten Klappe (5), wobei der Rahmen (4) und die Klappe (5) jeweils aus einem schaumstoffbeschichteten und folienkaschierten Träger (2) hergestellt sind, wobei die Folie (6) den Spalt (7) zwischen Klappe (5) und Rahmen (4) überspannt und somit entlang des Spalts (7) eine Aufreißlinie (1) bildet und wobei die Folie (6) zu beiden Seiten der Aufreißlinie (1) verstärkt ist, **dadurch gekennzeichnet, daß** die Folie (6) entlang des Spalts (7) unmittelbar auf den Träger (2) aufgeklebt ist.

2. Luftsackabdeckung nach Anspruch 1, **dadurch gekennzeichnet, daß** die Folie (6) zu beiden Seiten der Aufreißlinie (1) durch eine Gießharzschicht verstärkt ist.

3. Luftsackabdeckung nach Anspruch 1 oder 2, **dadurch gekennzeichnet, daß** an der Unterseite des Trägers (2) entlang des Spalts (7) eine Armierung (13) vorgesehen ist.

4. Luftsackabdeckung nach einem der vorhergehenden Ansprüche, **dadurch gekennzeichnet, daß** die Armierung (13) das Scharnier im Anlenkbereich verstärkt.

## Claims

1. Air bag cover with a frame (4) and a flap (5) inserted in an outlet opening of the frame (4), wherein the frame (4) and the flap (5) are each made from a foam-coated and film-backed substrate (2), wherein the film (6) spans the gap (7) between flap (5) and frame (4) and so forms a tear-off line (1) along the gap (7) and wherein the film (6) is reinforced on both sides of the tear-off line (1), **characterised in that** the film (6) is adhered directly to the substrate (2) along the gap (7).

2. Air bag cover according to claim 1, **characterised in that** the film (6) is reinforced by a cast-resin layer on both sides of the tear-off line (1).

3. Air bag cover according to claim 1 or 2, **characterised in that** on the lower side of the substrate (2) along the gap (7) is provided a reinforcement (13).

4. Air bag cover according to any of the preceding claims, **characterised in that** the reinforcement (13) reinforces the hinge in the link region.

## Revendications

1. Couvercle de coussin gonflable, comportant un cadre (4) ainsi qu'un volet (5) qui est monté dans une ouverture de sortie du cadre (4), le cadre (4) et le volet (5) étant constitués d'un support (2) doublé d'un matériau expansé et revêtu d'un film, le film (6) recouvrant l'interstice (7) entre le volet (5) et le cadre (4) et formant ainsi, le long de l'interstice (7), une ligne de déchirure (1), et le film (6) étant renforcé de part et d'autre de la ligne de déchirure (1), caratérisée en ce que le film (6), le long de l'interstice (7), est collé directement sur le support (2).

2. Couvercle de coussin gonflable selon la revendication 1, **caractérisé en ce que** le film (6), de part et d'autre de la ligne de déchirure (1), est renforcé par une couche de résine coulée.

3. Couvercle de coussin gonflable selon la revendication 1 ou 2, **caractérisé en ce qu'**une armure (13) est prévue sur la face inférieure du support (2), le long de l'interstice (7).

4. Couvercle de coussin gonflable selon une des revendications précédentes, **caractérisé en ce que** l'armure (13) renforce la charnière dans la zone d'articulation.
